# EUROPEAN PATENT APPLICATION

(11) **EP 4 428 792 A1**
(43) Date of publication of application: **11.09.2024**
(21) Application number: 23209681.8
(22) Date of filing: 14.11.2023
(51) Int. Cl.: G06Q 20/02, G06Q 20/06, G06Q 20/12, G06Q 20/38, G06Q 20/40, G06Q 20/36

(54) **CONSTRUCTING TOKENS HAVING LIMITED AVAILABILITY ON DISTRIBUTED LEDGERS**

(30) Priority: 10.03.2023 US 202318182017
(71) Applicant: Fujitsu Limited, Kawasaki-shi, Kanagawa 211-8588 (JP)
(72) Inventor: TAKEUCHI, Takuma, Sunnyvale, California, 94085 (US); FUJIMOTO, Shingo, Kawasaki-shi, Kanagawa, 2118588 (JP)
(74) Representative: Hoffmann Eitle

(57) **Abstract**

In an embodiment, a cryptographic token with usage limitations is issued, via a first issuer contract on a first distributed ledger, to a user account. The cryptographic token is transferred from the user account to a first mediation contract. A first transaction that is associated with a transfer of the cryptographic token from the first mediation contract to a second mediation contract on a second distributed ledger, is detected. A second transaction that is associated with a use of the cryptographic token on the second distributed ledger is detected. A request to the first issuer contract on the first distributed ledger is issued to determine whether the second transaction satisfies the usage limitations. A Verification result that indicates that the second transaction satisfies the usage limitations is received. A digital asset is transferred to a seller account on a third distributed ledger based on the received verification result.

## Description

### FIELD

The embodiments discussed in the present disclosure are related to constructing tokens having a limited availability on multiple distributed ledgers.

### BACKGROUND

Advancements in Digital Ledger Technology (DLT) have led to wide adoption of digital assets or tokens such as Non-Fungible Token (NFT). Often, tokens may need to be transferred across distributed ledgers. Ledgers, such as Ethereum^{®} blockchain can be used to obtain such purpose-built assets using smart contracts. Typically, colored coins are employed that specify the use of assets such as, stock assets, real estate, and the like by adding additional information to assets on the blockchain. Conventionally, the colored coins may specify only the use of the asset. However, it may not be possible for any issuing ledger to guarantee that a receiver on another ledger correctly recognizes the use of the asset and refuses to pay for the use other than the authorized use of the asset.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include a set of operations, which may include issuing, via a first issuer contract on a first distributed ledger, a cryptographic token with usage limitations to a user account on the first distributed ledger. The set of operations may further include transferring the cryptographic token from the user account on the first distributed ledger to a first mediation contract on the first distributed ledger. The set of operations may further include detecting a first transaction that may be associated with a transfer of the cryptographic token from the first mediation contract to a second mediation contract on a second distributed ledger. The set of operations may further include detecting, after the transfer, a second transaction that may be associated with a use of the cryptographic token on the second distributed ledger. The set of operations may further include issuing a request to the first issuer contract on the first distributed ledger to determine whether the second transaction satisfies the usage limitations. The set of operations may further include receiving, in response to the request, a verification result that may indicate that the second transaction satisfies the usage limitations. The set of operations may further include transferring a digital asset to a seller account on a third distributed ledger based on the verification result.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment for a construction of tokens having a limited availability on distributed ledgers;
FIG. 2 is a block diagram that illustrates an exemplary bridge node for a construction of tokens having a limited availability on distributed ledgers;
FIGs. 3A, 3B, and 3C are diagrams that collectively illustrate an execution pipeline for a construction of tokens having a limited availability on distributed ledgers;
FIG. 4 is a diagram that illustrates an exemplary scenario for a construction of tokens having a limited availability on distributed ledgers; and
FIG. 5 is a flowchart of an example method for a construction of tokens having a limited availability on distributed ledgers;
all according to at least one embodiment described in the present disclosure.

### DESCRIPTION OF EMBODIMENTS

Some embodiments described in the present disclosure relate to methods and systems for a construction of tokens having a limited availability on distributed ledgers. Initially, a user may purchase a cryptographic token with usage limitations. In response to the purchase, the cryptographic token with the usage limitations may be issued to a user account on a first distributed ledger via a first issuer contract on the first distributed ledger. During a token transfer phase, the cryptographic token may be transferred from the user account on the first distributed ledger to a first mediation contract on the first distributed ledger. Both issuer and mediation contracts may be smart contracts that are executable on the first distributed ledger. After the transfer, a first transaction associated with a transfer of the cryptographic token from the first mediation contract to a second mediation contract on a second distributed ledger may be detected. The first transaction may include a token identifier associated with the cryptographic token. The token identifier may be stored in a database for future checks. After the detection, a second transaction associated with a use of the cryptographic token on the second distributed ledger may be detected. Thereafter, a request may be issued to the first issuer contract on the first distributed ledger to determine whether the second transaction satisfies the usage limitations. A verification result that may indicate that the second transaction satisfies the usage limitations may be received in response to the request. Finally, a digital asset (e.g., money in a digital form) may be transferred to a seller account on a third distributed ledger based on the verification result.

According to one or more embodiments of the present disclosure, the technological field of decentralized finance (DeFi) and distributed ledger technology (DLT) may be improved by configuring a computing system in a manner that the computing system may be able to construct tokens having a limited availability on distributed ledgers. The computing system may issue, via a first issuer contract on a first distributed ledger, a cryptographic token with usage limitations to a user account on the first distributed ledger. During a transfer phase, the computing system may transfer the cryptographic token from the user account on the first distributed ledger to a first mediation contract on the first distributed ledger. The computing system may detect a first transaction that may be associated with a transfer of the cryptographic token from the first mediation contract to a second mediation contract on a second distributed ledger. After the transfer, the computing system may detect a second transaction that may be associated with a use of the cryptographic token on the second distributed ledger. The computing system may issue a request to the first issuer contract on the first distributed ledger to determine whether the second transaction satisfies the usage limitations. In response to the request, the computing system may receive a verification result that indicates that the second transaction satisfies the usage limitations. The computing system may transfer a digital asset to a seller account on a third distributed ledger based on the verification result.

Distributed ledger technology has many applications, especially in conducting financial transactions by use of tokens. As decentralized applications (dApps) are spreading, assets such as book coupons which can be settled on multiple dApps for specific purposes are needed. Typically, colored coins are used for specific purposes. The colored coins may specify the use of assets by adding additional information to the assets on the ledger. However, any system which uses a colored coin may not be able to guarantee that a receiver of the colored coin correctly recognizes the use of the asset and refuses to pay for the use other than the authorized use of the asset. Moreover, the use of assets may be verified only in on the ledger where the assets are issued. Smart contracts on one distributed ledger may not be able to affect the settlement of transactions on another distributed ledger. Hence, when assets are moved across the ledgers, it may not be possible to judge whether a transaction satisfies a limitation on the usage of the asset in a destination ledger. That is, limited availability of the tokens cannot be judged after the tokens are moved from one ledger to another ledger.

The present disclosure provides a method and system for constructing tokens having a limited availability on distributed ledgers. The disclosed method may incorporate a feature that may provide limited availability of cryptographic tokens. When a cryptographic token is issued on a distributed ledger, then a first token identification (ID) may be specified and may be described in a transaction of the ledger. When the cryptographic token is transferred to another distributed ledger, a transaction record of the first token ID may be collected by a bridge, such as a bridge node. The disclosed method may further incorporate a feature to verify the usage of the cryptographic tokens. When the cryptographic token is used on another ledger, an issuer contract on the other ledger (i.e., a ledger that issued the token) may verify a second token ID associated with the cryptographic token. The first issuer contract may verify whether the purpose for which the cryptographic token is used on another ledger matches the purpose for which the cryptographic token was issued. For example, when the cryptographic token is used on another ledger for purchase an eBook, the issuer contract on the other ledger (i.e., a ledger that issued the token) may verify the token ID of the cryptographic token used for the purchase. Also, the issuer contract on the other ledger may verify whether the purchase is within the usage limitations for the token. The first issuer contract may transfer a digital asset (such as money via an escrow transaction) to an account of a recipient of the token (such as a shop account) based on the verification. Thus, the cryptographic tokens may not be used for purposes other than the authorized or specified use on other distributed ledgers.

Embodiments of the present disclosure are explained with reference to the accompanying drawings.

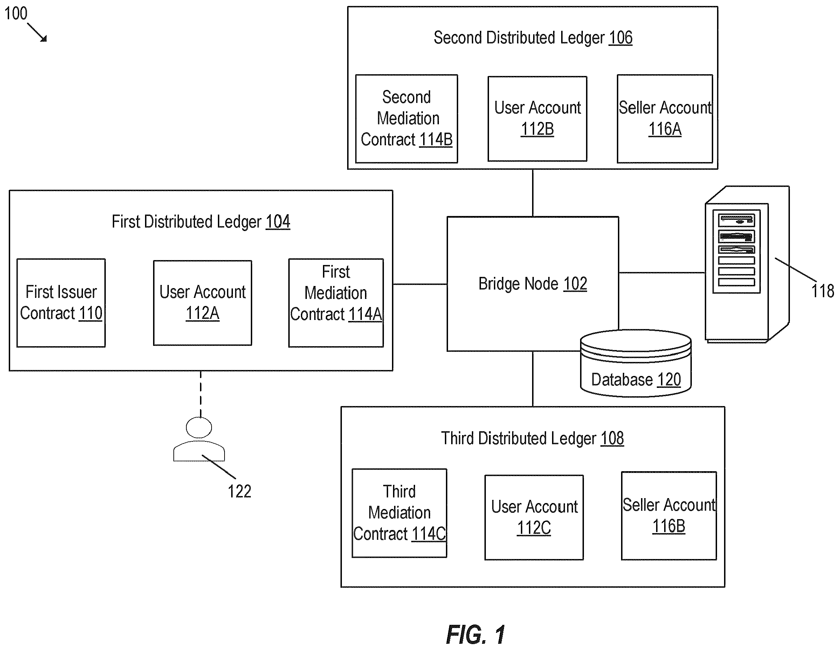

FIG. 1 is a diagram representing an example environment for a construction of tokens having a limited availability on distributed ledgers, according to at least one embodiment described in the present disclosure. With reference to FIG. 1, there is shown an environment 100. The environment 100 may include a bridge node 102, a first distributed ledger 104 (that includes a first issuer contract 110, a user account 112A, and a first mediation contract 114A), a second distributed ledger 106 (that includes a second mediation contract 114B, a user account 112B, and a seller account 116A), a third distributed ledger 108 (that includes a third mediation contract 114C, a user account 112C, and a seller account 116B), a server 118, and a database 120. The bridge node 102, the first distributed ledger 104, the second distributed ledger 106, and the third distributed ledger 108 may collectively form a system. In FIG. 1, there is further shown a user 122 associated with the first distributed ledger 104.

The system may include suitable logic, circuitry, and interfaces that may be configured to construct tokens having a limited availability on distributed ledgers, monitor transfer of such tokens from one ledger to another, and verify the use of such tokens across the ledgers. Examples of the system may include, but are not limited to, a network of Internet of Things (IoT) devices, a network of hardware-based annealer devices, a group of mainframe machines, a centralized server or a datacenter with multiple shared resources, a network of computer workstations, or a network of edge devices.

The bridge node 102 may include a suitable logic, circuitry, and interfaces that may monitor on-ledger/cross-ledger transactions and/or exchanges between the first distributed ledger 104, the second distributed ledger 106, and the third distributed ledger 108. The bridge node 102 may incorporate a feature for monitoring and a feature for issuing transactions. Further, the bridge node 102 may include a database for storing token identifiers associated with transfers of cryptographic tokens between distributed ledgers. For example, the bridge node 102 may detect a first transaction that may be associated with a transfer of a cryptographic token from the first mediation contract 114A to the second mediation contract 114B on the second distributed ledger 106. The bridge node may extract a first token identifier from the first transaction and may store the extracted token identifier in a database such as the database 120.

Although distributed ledgers can have different protocols, rules, and governance structures, the bridge node 102 may allow the distributed ledgers to interoperate safely (i.e., communicate and share data). A bridge node is often meant to exchange any type of data, such as smart contract calls, decentralized identities, off-chain information like as stock market price feeds, and so on.

The first distributed ledger 104 may be a decentralized and distributed database system that may maintain an immutable record of data operations or transactions. A set of data operations may be grouped together as a block and may be further linked to a previous block of data operations to form a chain of a plurality of blocks. All blocks of data operations may be stored in a decentralized manner, whereby all participants or nodes store all the plurality of blocks. Further, the first distributed ledger 104 may include an operating system which may allow for deployment of a group of smart contracts between multiple parties.

The first distributed ledger 104 may maintain a chain of blocks which uses accounts as state objects and a state of each account can be tracked by the chain. Herein, the accounts may represent identities of users, mining nodes, or automated agents. All the blocks of data operations or the smart contract may be associated with the accounts on the chain of blocks. By way of example, and not limitation, the first distributed ledger 104 may be a blockchain which uses accounts as state objects and a state of each account can be tracked by the blockchain. The scope of the disclosure may not be limited to the implementation of the first distributed ledger 104 as a particular type of blockchain. Other implementations of the first distributed ledger 104 may be possible in the present disclosure, without a deviation from the scope of the present disclosure.

The second distributed ledger 106 may be similar to the first distributed ledger 104. Therefore, the description of the second distributed ledger 106 is omitted from the disclosure for the sake of brevity. The third distributed ledger 108 may be similar to the first distributed ledger 104. Therefore, the description of the third distributed ledger 108 is omitted from the disclosure for the sake of brevity.

In an embodiment, the third distributed ledger 108 may be different from the first distributed ledger 104 and the second distributed ledger 106, and the second distributed ledger 106 may be different from the first distributed ledger 104. With reference to FIG. 1, the first distributed ledger 104, the second distributed ledger 106 and the third distributed ledger 108 may be different ledgers. The first distributed ledger 104 may be a ledger that issues the cryptographic token, the second distributed ledger 106 may be a ledger that receives the cryptographic token from the first distributed ledger 104, and the third distributed ledger 108 may be a ledger that transfers or escrows a digital asset (such as money) to the seller account 116B. For example, the seller account 116B may be an account that may be associated with a seller that sells eBooks.

In an embodiment, the second distributed ledger 106 may be same as the third distributed ledger 108. Thus, the second distributed ledger 106 may be used to receive the cryptographic token from the first distributed ledger 104 as well as the digital asset to a seller account on the second distributed ledger 106. The digital asset may be a payment in exchange for a product or a service that the user 122 may purchase via the cryptographic token. That is, in case the second distributed ledger 106 is same as the third distributed ledger 108, the functionality of the user account 112C may be incorporated in the user account 112B, the functionality of the third mediation contract 114C may be incorporated in the second mediation contract 114B, and the functionality of the seller account 116B may be incorporated in the seller account 116A.

The first issuer contract 110 may be a smart contract. In an embodiment, the first issuer contract 110 may be a computer-executable program that may issue the cryptographic token with usage limitations to the user account 112A on the first distributed ledger 104. The issued cryptographic token may have a limitedly availability. The issued cryptographic token may be used to purchase products such as games, books, or gift cards or services such as a subscription or a ticket.

In an embodiment, the first mediation contract 114A, the second mediation contract 114B, and the first issuer contract 110 are computer-executable programs. The smart contract may be a computer-executable program that may be stored on a distributed ledger such as a Blockchain. The computer-executable program may be executed when certain conditions associated with the computer-executable program are met. Further, the smart contract may be an agreement between two or more parties and may be automatically executed without involvement of intermediaries. A second issuer contract may be a smart contract similar to the first issuer contract 110. In an embodiment, the second issuer contract may be a computer-executable program that may be used to transfer the digital asset (such as a digital fiat currency as a payment) from the user account 112C on the third distributed ledger 108 to the second issuer contract on the third distributed ledger 108. The second issuer contract may be similar to the first issuer contract 110. Therefore, the description of the second issuer contract is omitted from the disclosure for the sake of brevity.

The user account 112A may be a digital wallet account associated with a user, such as the user 122 on the first distributed ledger 104. The user account 112A may store the cryptographic token issued from the first issuer contract 110. The user account 112B and the user account 112C may be digital wallet accounts that may be associated with a user. The cryptographic token may be stored in the user account 112B after the transfer.

The first mediation contract 114A may be a computer-executable program that may be used to transfer the issued cryptographic token with usage limitations from the user account 112A on the first distributed ledger 104 to the second distributed ledger 106. The issued cryptographic token may be transferred from the user account 112A to the first mediation contract 114A for mediation. The first mediation contract 114A may transfer the issued cryptographic token to the second mediation contract 114B on the second distributed ledger 106. The first mediation contract 114A may be a smart contract similar to the first issuer contract 110. Therefore, the description of the first mediation contract 114A is omitted from the disclosure for the sake of brevity.

The second mediation contract 114B may be a computer-executable program that may be used to receive the cryptographic token with usage limitations from the first mediation contract 114A. Thus, the second mediation contract 114B and the first mediation contract 114A may be collectively used for performing first transaction that may be associated with the transfer of the cryptographic token from the first mediation contract 114A to the second mediation contract 114B on the second distributed ledger 106. The second mediation contract 114B may be a smart contract similar to the first issuer contract 110. Therefore, the description of the second mediation contract 114B is omitted from the disclosure for the sake of brevity.

The seller account 116A and the seller account 116B may be digital wallet accounts that may be used for digital shopping or purchasing physical or digital products or services. For example, the user 122 who may be associated with the user account 112B may transfer the cryptographic token to the seller account 116A to purchase a book.

The server 118 may include suitable logic, circuitry, and interfaces, and/or code that may be configured to host the bridge node 102 and monitor transactions on and across distributed ledgers on behalf of the bridge node 102. For example, the server 118 may issue a request to the first issuer contract 110 on the first distributed ledger 104 to determine whether a transaction associated with the use of the cryptographic token satisfies the usage limitations. In response to the request, the server 118 may receive a verification result that indicates that the transaction satisfies the usage limitations. The server 118 may be implemented as a cloud server and may execute operations through web applications, cloud applications, HTTP requests, repository operations, file transfer, and the like. Other example implementations of the server 118 may include, but are not limited to, a database server, a file server, a web server, a media server, an application server, a mainframe server, or a cloud computing server.

In at least one embodiment, the server 118 may be implemented as a plurality of distributed cloud-based resources by use of several technologies that may be well known to those ordinarily skilled in the art. A person with ordinary skill in the art will understand that the scope of the disclosure may not be limited to the implementation of the server 118 and the system as two separate entities. In certain embodiments, the functionalities of the server 118 can be incorporated in its entirety or at least partially in the system, without a departure from the scope of the disclosure.

The database 120 may include suitable logic, interfaces, and/or code that may be configured to store token identifiers associated with cryptographic tokens issued on one or more distributed ledgers (such as the first distributed ledger 104). The database 120 may be stored or cached on a device such as a server or one of the distributed ledges of the system (shown in FIG. 1). The device storing the database 120 may be configured to receive a query for a first token identifier associated with the cryptographic token. In response, the device storing the database 120 may retrieve and provide the queried first token identifier to a requestor. In some embodiments, the database 120 may be hosted on a plurality of servers stored at same or different locations. The operations of the database 120 may be executed using hardware including a processor, a microprocessor (e.g., to perform or control performance of one or more operations), a field-programmable gate array (FPGA), or an application-specific integrated circuit (ASIC). In some other instances, the database 120 may be implemented using software.

In operation, the first distributed ledger 104 may issue a cryptographic token with usage limitations to the user account 112A on the first distributed ledger 104 via the first issuer contract 110 on the first distributed ledger 104. The cryptographic token may be a cross-chain token or a type of digital asset that may be utilized on different distributed ledgers for cross-chain or on-chain transactions. The token may be moved and used across many ledgers, allowing the token to act as a bridge between the ledgers. Examples of the cryptographic token may include, but are not limited to, Ethereum^{®} request for comment (ERC) standard tokens such as ERC-20, XC-20, BEP-20, or ERC-721.

The token may be issued after the user 122 purchases the cryptographic token. For example, the user 122 may purchase the cryptographic token by providing an input via a user interface on a user device. The bridge node 102 may transfer a digital asset from the user account 112C on the third distributed ledger 108 to a second issuer contract (not shown) on the third distributed ledger **108.** The transfer of the digital asset to the second issuer contract may be performed in response to the issuance of the cryptographic token. **By way of example, and not limitation, the digital asset may be digital** money that the bridge node 102 may escrow from the user account 112A to the second issuer contract on the third distributed ledger 108.

The first issuer contract 110 may issue the cryptographic token with usage limitations. For example, the cryptographic token may be issued for only purchasing gaming assets such as game coins. The cryptographic token may be loaded in the user account 112A. The user 122 may be provided with options to use the cryptographic token from the user account 112A to purchase the gaming assets.

The first distributed ledger 104 may transfer the cryptographic token from the user account 112A on the first distributed ledger 104 to the first mediation contract 114A on the first distributed ledger 104. As discussed, the first mediation contract 114A may perform mediation and may help in transferring the cryptographic token from the user account 112A on the first distributed ledger 104 to the second distributed ledger 106. As an example, a request for transferring the cryptographic token may be received from the user 122 via a user interface.

Once the transfer of the cryptographic token is initiated, the bridge node 102 may detect a first transaction that may be associated with the transfer of the cryptographic token from the first mediation contract 114A to the second mediation contract 114B on the second distributed ledger 106. The cryptographic token may be transferred from the first mediation contract 114A to the second mediation contract 114B on the second distributed ledger 106 via the bridge node 102. The bridge node 102 may detect the first transaction and may store the first token identifier associated with the first transaction in the database 120 associated with the bridge node 102. The cryptographic token may be stored in the user account 112B.

The user 122 may purchase an asset such as, a game asset from a store and the cryptographic token may be used to initiate another transaction with the seller account 116B. The second mediation contract 114B may detect, after the transfer of the cryptographic token from the first mediation contract 114A to the second mediation contract 114B on the second distributed ledger 106, a second transaction that may be associated with a use of the cryptographic token on the second distributed ledger 106. For example, the cryptographic token may be used for purchase of game assets, such as game coins, rewards, game cards, new characters, or new character costumes. The user 122 associated with the user account 112B may use the cryptographic token to purchase the gaming item from the seller account 116A. As an example, the user 122 associated with the user account 112B may select a product such as an apparel from an apparel application or a gift card from a gift store application. If the user 122 creates an order for the selected product, then the second transaction may be generated by the user 122 associated with the user account 112B. An example of the second transaction is presented in Table 1, as follows:

**Table 1: Example of the second transaction**

| | |
|---|---|
| User account | Wallet with address "X" |
| Seller Account | Wallet with address "Y" |
| Transfer from | Wallet address "X" |
| Transfer to | Wallet with address "Y" |
| Use | Game asset |
| Price | 100 USD |
| Order ID | OD1001 |
| Delivery Mode | Game account registered with wallet |
| Service | Payment Request |

From the Table 1, it may be observed that the cryptographic token may be transferred from the wallet with address "X" associated with the user 122 to the wallet with address "Y" associated with the seller for purchasing the game asset. The wallet with address "X" that may be associated with the user 122. The wallet with address "Y" that may be associated with the seller. The price of the game asset may be hundred dollars, for example. Based on the payment of hundred dollars to the seller account, that is, the wallet with address "Y", the game asset may be delivered to the game account registered with wallet, for example, the wallet with address "X". It should be noted that data provided in Table 1 is merely an example and such an example should not be construed as limiting the present disclosure.

The bridge node 102 may issue a request to the first issuer contract 110 on the first distributed ledger 104 to determine whether the second transaction satisfies the usage limitations. It should be noted that the usage limitations of the cryptographic token may be stored in the first issuer contract 110 as the first issuer contract 110 issues the cryptographic token. When the second distributed ledger 106 creates the second transaction via the user account 112B to use the cryptographic token for purchase of the products or services from the seller account 116A, the first issuer contract 110 may be requested to verify the second transaction.

The bridge node 102 may receive, in response to the request, a verification result that indicates that the second transaction satisfies the usage limitations. In other words, the verification result may be used to verify that the second transaction is performed for a purpose (e.g., e-book purchase) that is one of a set of valid usages specified in the usage limitations for the cryptographic token. The first issuer contract 110 may verify whether the second transaction satisfies the usage limitations and may provide the verification result. As an example, the usage limitations may specify that the cryptographic token be used for purchasing books. However, the user associated with the user account 112B makes the second transaction to use the cryptographic token for purchase of game assets. The first issuer contract 110 may verify that the second transaction does not satisfies the usage limitations and may provide the information to cancel an order and payment request specified in the second transaction. The second distributed ledger 106 may raise the second transaction via the user account 112B to use the cryptographic token for purchasing books. The first issuer contract 110 may verify whether the second transaction satisfies the usage limitations and may provide the verification result that the second transaction can be processed for payment based on the verification.

As a payment towards the purchase, the third mediation contract 114C may transfer a digital asset from the user account 112C to the seller account 116B on the third distributed ledger 108 based on the verification result. The digital asset may be digital money (e.g., in Dollars), crypto coins, NFTs, digital gold, or any other digitally transferrable asset. As discussed, the verification result may indicate whether the second transaction satisfies the usage limitations or not. If the verification result indicates that the second transaction satisfies the usage limitations, then the digital asset may be transferred to the seller account 116B. However, if the verification result indicates that the second transaction does not satisfy the usage limitations, then the second transaction may be aborted, and the digital asset may not be transferred to the seller account 116B.

The verification may help the system of the present disclosure to ensure that cryptographic tokens are used as per their usage limitations in transactions that occur across distributed ledgers (e.g., cross-chain transactions). The cryptographic tokens may be issued with a limited availability and the usage of the cryptographic tokens may be verified even when the cryptographic tokens are transferred to another distributed ledger (e.g., the second distributed ledger). The present disclosure makes it possible to issue application-specific cryptographic tokens that may be commonly used among distributed ledgers. For example, application-specific cryptographic tokens may be implemented in game applications with user and seller accounts on different ledgers.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the system but not the database 120. In addition, in some embodiments, the functionality of each of the database 120 and the server 118 may be incorporated into the system, without a deviation from the scope of the disclosure.

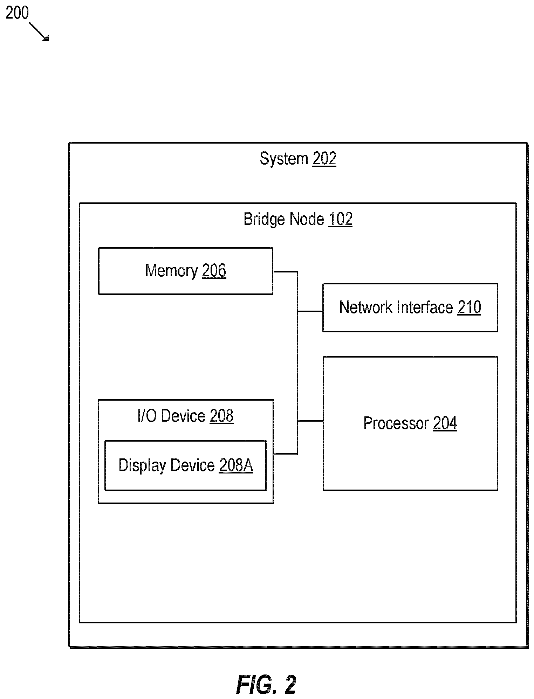

FIG. 2 is a block diagram that illustrates an exemplary bridge node for a construction of tokens having a limited availability on distributed ledgers, in accordance with at least one embodiment described in the present disclosure. FIG. 2 is explained in conjunction with elements from FIG. 1. With reference to FIG. 2, there is shown a block diagram 200 of a system 202 that includes the bridge node 102. As illustrated in FIG. 1, the bridge node 102, the first distributed ledger 104, the second distributed ledger 106, and the third distributed ledger 108 may together form the system 202. The bridge node 102 may include a processor 204, a memory 206, an input/output (I/O) device 208 (including a display device 208A), and a network interface 210.

The processor 204 may include suitable logic, circuitry, and interfaces that may be configured to execute a set of instructions stored in the memory 206. The processor 204 may be configured to execute program instructions associated with different operations to be executed by the system 202. The processor 204 may be implemented based on a number of processor technologies known in the art. Examples of the processor technologies may include, but are not limited to, a Central Processing Unit (CPU), X86-based processor, a Reduced Instruction Set Computing (RISC) processor, an Application-Specific Integrated Circuit (ASIC) processor, a Complex Instruction Set Computing (CISC) processor, a Graphical Processing Unit (GPU), a co-processor, or a combination thereof.

Although illustrated as a single processor in FIG. 2, the processor 204 may include any number of processors configured to, individually or collectively, perform or direct performance of any number of operations of the system 202 or the bridge node 102, as described in the present disclosure. Additionally, one or more of the processors may be present on one or more different electronic devices, such as different servers. In some embodiments, the processor 204 may be configured to interpret and/or execute program instructions and/or process data stored in the memory 206. After the program instructions are loaded into the memory 206, the processor 204 may execute the program instructions.

The memory 206 may include suitable logic, circuitry, and interfaces that may be configured to store instructions to be executed by the processor 204. The instructions stored in the memory 206 may be executed by the processor 204 to perform the different operations of the processor 204 (and the bridge node 102). The memory 206 that may be configured to the first token identifier associated with the first transaction. Examples of implementation of the memory 206 may include, but are not limited to, Random Access Memory (RAM), Read Only Memory (ROM), Electrically Erasable Programmable Read-Only Memory (EEPROM), Hard Disk Drive (HDD), a Solid-State Drive (SSD), a CPU cache, and/or a Secure Digital (SD) card.

The I/O device 208 may include suitable logic, circuitry, and interfaces that may be configured to receive an input from the user 122 and provide an output based on the received input. For example, the I/O device 208 may receive a request of purchase of the cryptographic token. Further, the I/O device 208 may render the usage limitations associated with the cryptographic token. The I/O device 208 which may include various input and output devices, may be configured to communicate with the processor 204. Examples of the I/O device 208 may include, but are not limited to, a touch screen, a keyboard, a mouse, a joystick, a microphone, a display device (e.g., the display device 208A), and a speaker

The display device 208A may include suitable logic, circuitry, and interfaces that may be configured to display the usage limitations associated with the cryptographic token, the first transaction, and the second transaction. The display device 208A may be a touch screen which may enable a user to provide a user-input via the display device 208A. The touch screen may be at least one of a resistive touch screen, a capacitive touch screen, or a thermal touch screen. The display device 208A may be realized through several known technologies such as, but not limited to, at least one of a Liquid Crystal Display (LCD) display, a Light Emitting Diode (LED) display, a plasma display, or an Organic LED (OLED) display technology, or other display devices. In accordance with an embodiment, the display device 208A may refer to a display screen of a head mounted device (HMD), a smart-glass device, a seethrough display, a projection-based display, an electro-chromic display, or a transparent display.

The network interface 210 may include suitable logic, circuitry, and interfaces that may be configured to facilitate communication between the processor 204, the server 118, and a device hosting the database 120 (and/or any other device in the environment 100). The network interface 210 may be implemented by use of various known technologies to support wired or wireless communication of the bridge node 102 with the server 118. The network interface 210 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, or a local buffer circuitry. The network interface 210 may be configured to communicate via wireless communication with networks, such as the Internet, an Intranet, or a wireless network, such as a cellular telephone network, a wireless local area network (LAN), and a metropolitan area network (MAN). The wireless communication may be configured to use one or more of a plurality of communication standards, protocols and technologies, such as Global System for Mobile Communications (GSM), Enhanced Data GSM Environment (EDGE), wideband code division multiple access (W-CDMA), Long Term Evolution (LTE), 5^{th} Generation (5G) New Radio (NR), code division multiple access (CDMA), time division multiple access (TDMA), Bluetooth, Wireless Fidelity (Wi-Fi) (such as IEEE 802.11a, IEEE 802.11b, IEEE 802.11g or IEEE 802.11n), voice over Internet Protocol (VoIP), light fidelity (Li-Fi), Worldwide Interoperability for Microwave Access (Wi-MAX), a protocol for email, instant messaging, and a Short Message Service (SMS).

Modifications, additions, or omissions may be made to the system 202 without departing from the scope of the present disclosure. For example, in some embodiments, the example system 202 may include any number of other components that may not be explicitly illustrated or described for the sake of brevity.

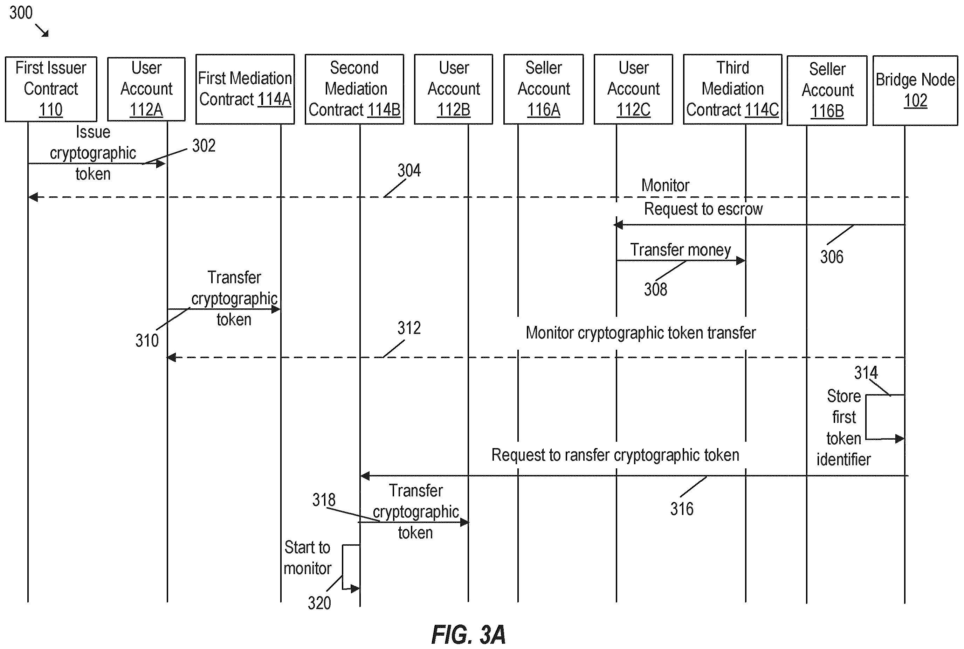

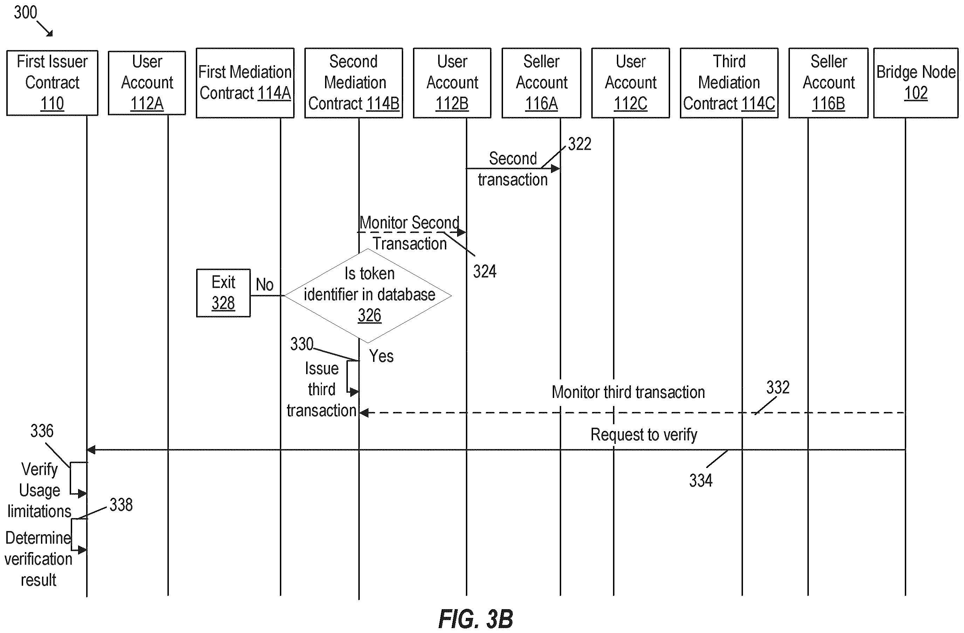

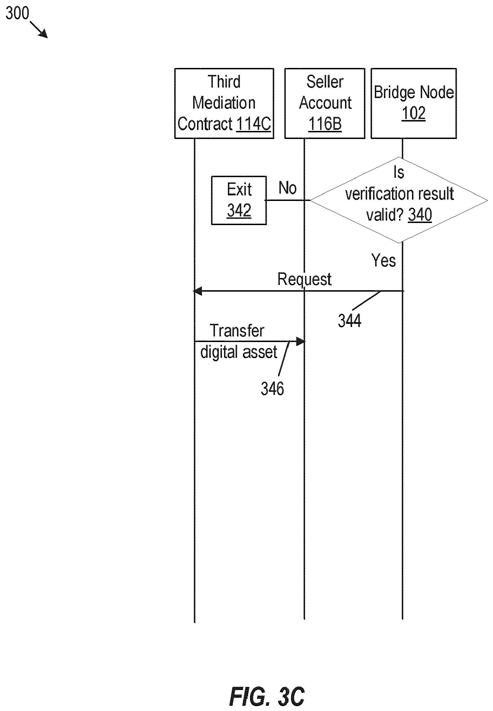

FIGs. 3A, 3B, and 3C are diagrams that collectively illustrate an execution pipeline for a construction of tokens having a limited availability on distributed ledgers, in accordance with an embodiment of the disclosure. FIGs. 3A, 3B, and 3C are described in conjunction with elements from FIG. 1 and FIG. 2. With reference to FIGs. 3A, 3B, and 3C, there is shown an execution pipeline 300. The execution pipeline 300 may include the first issuer contract 110, the user account 112A, the user account 112B, the user account 112C, the first mediation contract 114A, the second mediation contract 114B, the third mediation contract 114C, the seller account 116A, and the bridge node 102. The exemplary execution pipeline 300 may further include a set of operations (302 to 348) that may be executed by one or more components of FIG. 1, such as the bridge node 102. The set of operations may be performed by the system 202 to construct tokens having a limited availability on distributed ledgers, as described herein.

At 302, an operation to issue a cryptographic token may be executed. The first issuer contract 110 on the first distributed ledger 104 may be configured to issue the cryptographic token with usage limitations to the user account 112A on the first distributed ledger 104. For example, the user 122 associated with the first distributed ledger 104 may make a request to via a digital application for issuance of the cryptographic token. The first issuer contract 110 may verify the request. The first issuer contract 110 may then issue the cryptographic token.

At 304, an operation to monitor the issued cryptographic token may be executed. Once the cryptographic token is issued to the user account 112A, the bridge node 102 may monitor the issued cryptographic token.

At 306, a request to transfer a digital asset (e.g., escrow an amount in Dollars) may be executed. The third distributed ledger 108 may be configured to transfer the digital asset from the user account 112C on the third distributed ledger 108 to the second issuer contract on the third distributed ledger 108. The transfer of the digital asset to the second issuer contract may be performed in response to the issuance of the cryptographic token.

The user account 112C may be associated with the user 122. In an embodiment, the user account 112C may be same as the user account 112A. In another embodiment, the user account 112C may be a digital wallet account that is different from the user account 112A. In order to issue the cryptographic token from the first issuer contract 110 to the user account 112A, the user 122 may request a transfer of the digital asset from the user account 112C to the second issuer contract. In an embodiment, the transfer of the digital asset may be performed via an escrow transaction. The escrow transaction may be performed in accordance with the issuance of the cryptographic token. The bridge node 102 may send the request to escrow the payment to the user account 112C. The request to escrow the payment may be performed after the issuance of the cryptographic token. For example, the cryptographic token may represent an amount such as 100 USD and an amount of digital currency worth 100 USD may be escrowed to the user account 112C after the issuance of the cryptographic token.

At 308, an operation to transfer money may be executed. The user account 112C may verify the request to escrow received from the bridge node 102. After verification, the user account 112C may transfer the money (e.g., in the form of a digital dollar payment or crypto coins) from the user account 112C to the third mediation contract 114C on the third distributer ledger 108. The money transfer may be performed in accordance with the issuance of the cryptographic token.

At 310, an operation to transfer the issued cryptographic token may be executed. The first distributed ledger 104 may be further configured to transfer the cryptographic token from the user account 112A on the first distributed ledger 104 to the first mediation contract 114A on the first distributed ledger 104. The first mediation contract 114A may facilitate a transfer of the cryptographic token between two ledgers. For example, a request for a transfer of the cryptographic token from the user account 112A on the first distributed ledger 104 to the user account 112B on the second distributed ledger 106 may be received via an application. In response to the request, the first distributed ledger 104 may transfer the cryptographic token from the user account 112A to the first mediation contract 114A.

The bridge node 102 may be configured to detect a first transaction that may be associated with the transfer of the cryptographic token from the first mediation contract 114A to the second mediation contract 114B on the second distributed ledger 106.

In an embodiment, the first transaction may include a first token identifier associated with the cryptographic token. A token identifier may be used to distinguish one cryptographic token with another cryptographic token. The first token identifier associated with the cryptographic token may thus be used to distinguish the cryptographic token associated with the first transaction from other cryptographic tokens.

At 312, an operation to monitor the transfer of the cryptographic token may be executed. The bridge node 102 may monitor the transfer of the cryptographic token from the user account 112A to the first mediation contract 114A and from the first mediation contract 114A to the second mediation contract 114B.

At 314, an operation to store the first token identifiers may be executed. In an embodiment, the bridge node 102 may be configured to extract the first token identifier from the first transaction and store the first token identifier in the database 120.

At 316, an operation to request a transfer of the cryptographic token may be executed. The bridge node 102 may send the request to transfer the cryptographic token to the second mediation contract 114B on the second distributed ledger 106. The request to transfer of the cryptographic token may require the second mediation contract 114B to transfer the cryptographic token from the second mediation contract 114B to the user account 112B.

At 318, an operation to transfer the cryptographic token may be executed. As part of the operation, the second mediation contract 114B on the second distributed ledger 106 may verify the request to transfer the cryptographic token received from the bridge node 102 at 316. Thereafter, the second mediation contract 114B may transfer the cryptographic token to the user account 112B based on the verification.

At 320, a monitoring operation may be executed. As part of the operation, the second mediation contract 114B may be configured to monitor the transfer of the cryptographic token to the user account 112B.

At 322, an operation to initiate a second transaction may be executed. The second distributed ledger 106 may initiate the second transaction that may be associated with the use of the cryptographic token. For example, the second distributed ledger 106 may try to use the cryptographic token stored in the user account 112B to purchase a game asset from the seller account 116A.

In an embodiment, the use of the cryptographic token on the second distributed ledger 106 may include a first transfer of the cryptographic token from the second mediation contract 114B to the user account 112B on the second distributed ledger 106 and a second transfer of the cryptographic token from the user account 112B on the second distributed ledger 106 to the seller account 116A on the second distributed ledger 106. As discussed, the cryptographic token may be transferred from the second mediation contract 114B to the user account 112B on the second distributed ledger 106 at 318. At 320, the cryptographic token may be transferred from the user account 112B on the second distributed ledger 106 to the seller account 116A on the second distributed ledger.

At 324, an operation to monitor the second transaction may be executed. As part of the operation, the second mediation contract 114B may extract a second token identifier that may be included in the second transaction.

At 326, an operation may be executed to determine whether the second token identifier exists in the database 120. The second token identifier may be a token identifier that may be associated with the cryptographic token and may be included in the second transaction. The second mediation contract 114B may verify whether the second token identifier is same as the first token identifier already stored in the database 120 (as described at 314). In case the second token identifier is not same as the first token identifier, the second transaction may be aborted or canceled at 328. In case the second token identifier is same as the first token identifier, then the second mediation contract 114B may issue a third transaction at 330.

At 330, an operation to issue the third transaction may be executed. The second mediation contract 114B may issue the third transaction. The third transaction may confirm that the second token identifier is same as the first token identifier.

At 332, an operation to monitor the third transaction may be executed. The bridge node 102 may be configured to monitor the third transaction that specifies that the second token identifier is same as the first token identifier. The bridge node 102 may then proceed to verify the use of the cryptographic token on the second distributed ledger 106. As discussed, the cryptographic token may be used for a specific purpose, which may or may not be a valid purpose as per the usage limitations. The purpose for which the cryptographic token is used must be verified before a payment is initiated against the use. For example, the cryptographic token may be used to purchase a pair of shoes from a seller (that has the seller account 116A on the second distributed ledger 106.

At 334, a request to verify the use specified in the second transaction may be executed. For example, the bridge node 102 may be configured to issue the request to the first issuer contract 110 on the first distributed ledger 104 to determine whether the second transaction satisfies the usage limitations. In other words, the request may be issued to verify that the second transaction is performed for a purpose (e.g., e-book purchase) that is one of a set of valid usages specified in the usage limitations for the cryptographic token. The request may be issued based on a determination (at 326 and 332) that the second token identifier in the second transaction is same as the first token identifier stored in the database 120. The usage limitations of the cryptographic token may be stored in the first issuer contract 110 as the first issuer contract 110 issues the cryptographic token. Thus, the second transaction may be verified only by the first issuer contract on in the first distributed ledger 104.

At 336, an operation to verify the use specified in the second transaction may be executed. The first issuer contract 110 may be configured to determine whether the second transaction satisfies the usage limitations. For example, the cryptographic token may be issued solely for a purchase of digital gift cards. The first issuer contract 110 may verify whether the second transaction is used for the purchase of a digital gift card.

At 338, an operation to determine a verification result may be executed. The first issuer contract 110 may be configured to determine the verification result. The verification result may specify whether the use specified in the second transaction satisfies the usage limitations. The bridge node 102 may be configured to receive, in response to the request, the verification result that may indicate that the second transaction satisfies the usage limitations.

At 340, it may be determined whether the second transaction is a valid transaction based on the verification result. A transaction may be determined as a valid transaction if the verification result indicates that imply that the use specified in the second transaction satisfies the usage limitations. In accordance with an embodiment, the bridge node 102 may determine whether the second transaction is a valid transaction. If the second transaction is a not a valid transaction, then then the second transfer may be aborted, and control may end at 342. If the second transaction is a valid transaction, then the control may proceed to 344.

At 344, a request to transfer a digital asset may be executed. The bridge node 102 may request the third mediation contract 114C to transfer the digital asset to the seller account 116B associated with the purchase of the product or services. The transfer may be requested to initiate a payment to the seller against the purchase (e.g., a purchase of the pair of shoes via the cryptographic token).

At 346, an operation to transfer the digital asset may be executed. The third mediation contract 114C may transfer the digital asset to the seller account 116B on the third distributed ledger 108 based on the verification result. The digital asset may include, for example, a digital dollar payment (i.e., a payment using a fiat current such as Dollars), crypto coins, NFTs, digital gold, or any other digitally transferrable asset. The bridge node 102 may then delete the first token identifier from the database 120 associated with the bridge node 102. In an embodiment, the transfer of the digital asset may be performed via an escrow transaction. The escrow transaction may include a transfer of money (e.g., in United States Dollars) to the seller account 116B against the purchase of a product or a service.

In an embodiment, the transfer of the digital asset to the seller account 116B on the third distributed ledger 108 may be performed via the third mediation contract 114C on the third distributed ledger 108. It may be noted that the digital asset may be transferred based on a price of the product that the user 122 associated with the second distributed ledger 106 may have purchased from a shop associated with the seller account 116A. The seller account 116A and the seller account 116B may be associated with the shop. As an example, the digital shop may be an e-commerce store that includes a listing of products. The user 122 associated with the second distributed ledger106 may select a book. In order to purchase the book, the third distributed ledger 108 may transfer the digital asset such as a digital currency to the seller account 116B to complete the purchase of the book if the purchase satisfies the usage limitations (specified for the cryptographic token used in the purchase). As another example, the user 122 may select a service such as, a subscription for an over-the-top (OTT) platform. The third distributed ledger 108 may transfer the digital asset such as a digital currency (in Dollars) to the seller account 116B for the purchase of the subscription for the OTT platform if the purchase satisfies the usage limitations (specified for the cryptographic token used in the purchase).

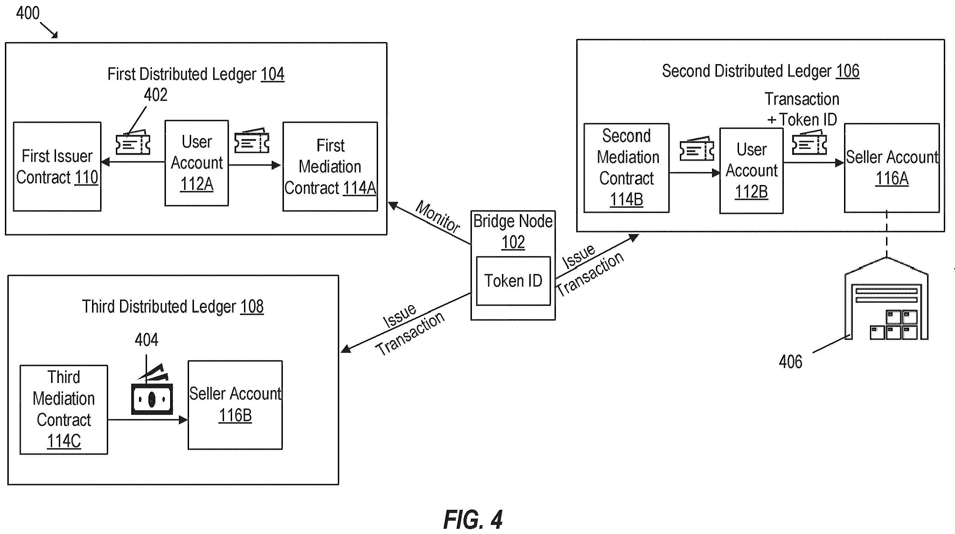

FIG. 4 is a diagram that illustrates an exemplary scenario for a construction of tokens having a limited availability on distributed ledgers, in accordance with at least one embodiment described in the present disclosure. FIG. 4 is described in conjunction with elements from FIG. 1, FIG. 2, FIG. 3A, FIG. 3B, and FIG. 3C. With reference to FIG. 4, there is shown an exemplary scenario 400. The exemplary scenario 400 may include the bridge node 102, the first distributed ledger 104, the second distributed ledger 106, the third distributed ledger 108, a cryptographic token 402, a digital asset 404, and a digital shop 406. The first distributed ledger 104 may include the first issuer contract 110, the user account 112A, the first mediation contract 114A. The second distributed ledger 106 may include the second mediation contract 114B, the user account 112B, and the seller account 116A. The digital shop 406 may be associated with the seller account 116A. The third distributed ledger 108 may include the third mediation contract 114C and the seller account 116B.

During operation, the cryptographic token 402 may be issued from the first issuer contract 110 and may be transferred to the user account 112A. Thereafter, the cryptographic token 402 may be transferred from the user account 112A to the first mediation contract 114A. Further, the cryptographic token 402 may be transferred to the second mediation contract 114B on the second distributed ledger 106 based on the first transaction. The bridge node 102 may extract the first token identifier associated with the cryptographic token 402 from the first transaction and may store the extracted first token identifier in the database 120. Thereafter, the cryptographic token 402 may be transferred to the user account 112B from the second mediation contract 114B. The cryptographic token 402 may be used for purchase of products from the digital shop 406 based on the second transaction. The user associated with the user account 112B may transfer the cryptographic token 402 from the user account 112B to the seller account 116A in order to purchase a book from the digital shop 406. As part of a payment towards the purchase, the digital asset 404 may be transferred from the third mediation contract 114C to the seller account 116B to complete the purchase of the book from the digital shop 406.

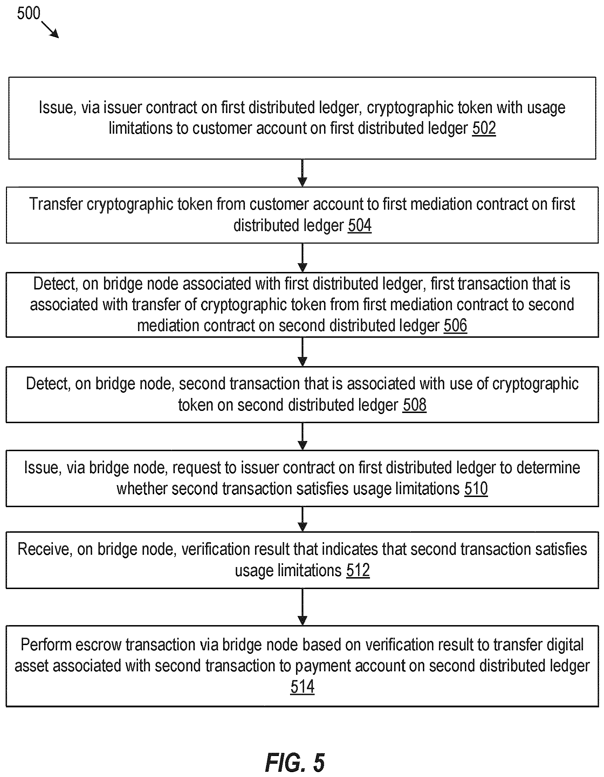

FIG. 5 is a flowchart of an example method for a construction of tokens having a limited availability on distributed ledgers, in accordance with at least one embodiment described in the present disclosure. FIG. 5 is described in conjunction with elements from FIG. 1, FIG. 2, FIG. 3A, FIG. 3B, FIG. 3C, and FIG. 4. With reference to FIG. 5, there is shown a flowchart 500. The method illustrated in the flowchart 500 may start at 502 and may be performed by any suitable system, apparatus, or device, such as by the example bridge node 102, the first distributed ledger 104, the second distributed ledger 106, and the third distributed ledger 108 of FIG. 1 or the processor 204 of FIG. 2.

At 502, the cryptographic token with usage limitations may be issued, via the first issuer contract 110 on the first distributed ledger 104 to the user account 112A on the first distributed ledger 104. The first issuer contract 110 on the first distributed ledger 104 may issue the cryptographic token with usage limitations to the user account 112A on the first distributed ledger 104. Details about the cryptographic token are further provided, for example, in FIGs. 3A, 3B, and 3C.

At 504, the cryptographic token may be transferred from the user account 112A on the first distributed ledger 104 to the first mediation contract 114A on the first distributed ledger 104. The first distributed ledger 104 may be configured to transfer the cryptographic token from the user account 112A on the first distributed ledger 104 to the first mediation contract 114A on the first distributed ledger 104. Details about the transfer of the cryptographic token are further provided, for example, in FIGs. 3A, 3B, and 3C.

At 506, the first transaction that may be associated with the transfer of the cryptographic token from the first mediation contract 114A to the second mediation contract 114B on the second distributed ledger 106 may be detected. The bridge node 102 may be configured to detect the first transaction that may be associated with the transfer of the cryptographic token from the first mediation contract 114A to the second mediation contract 114B on the second distributed ledger 106. Details about the detection of the first transaction are further provided, for example, in FIGs. 3A, 3B, and 3C.

At 508, the second transaction that may be associated with the use of the cryptographic token on the second distributed ledger 106 may be detected, after the transfer. The second mediation contract 114B may be configured to detect, after the transfer, the second transaction that may be associated with the use of the cryptographic token on the second distributed ledger 106. Details about the detection of the second transaction are further provided, for example, in FIGS. 3A, 3B, AND 3C.

At 510, the request to the first issuer contract 110 may be issued on the first distributed ledger 104 to determine whether the second transaction satisfies the usage limitations. The bridge node 102 may be configured to issue the request to the first issuer contract 110 on the first distributed ledger 104 to determine whether the second transaction satisfies the usage limitations. Details about the request to the first issuer contract 110 are further provided, for example, in FIGs. 3A, 3B, and 3C.

At 512, a verification result that indicates that the second transaction satisfies the usage limitations may be received in response to the request. The bridge node 102 may be configured to receive, in response to the request, the verification result that indicates that the second transaction satisfies the usage limitations. The first issuer contract 110 may verify whether the second transaction satisfies the usage limitations and provide the verification result. Details about the verification result are further provided, for example, in FIGs. 3A, 3B, and 3C.

At 514, the digital asset may be transferred to the seller account 116B on the third distributed ledger 108 based on the verification result. The third mediation contract 114C may be configured to transfer the digital asset to the seller account 116B on the third distributed ledger 108 based on the verification result. Details about the digital asset are further provided, for example, in FIGs. 3A, 3B, and 3C.

Although the flowchart 500 is illustrated as discrete operations, such as 502, 504, 506, 508, 510, 512, and 514. However, in certain embodiments, such discrete operations may be further divided into additional operations, combined into fewer operations, or eliminated, depending on the particular implementation without detracting from the essence of the disclosed embodiments.

Various embodiments of the disclosure may provide one or more non-transitory computer-readable storage media configured to store instructions that, in response to being executed, cause a system (such as, the system 202 of FIG. 2) to perform operations. The operations may include issuing, via a first issuer contract on a first distributed ledger, a cryptographic token with usage limitations to a user account on the first distributed ledger. The operations may include transferring the cryptographic token from the user account on the first distributed ledger to a first mediation contract on the first distributed ledger. The operations may include detecting a first transaction that is associated with a transfer of the cryptographic token from the first mediation contract to a second mediation contract on a second distributed ledger. The operations may include detecting, after the transfer, a second transaction that is associated with a use of the cryptographic token on the second distributed ledger. The operations may include issuing a request to the first issuer contract on the first distributed ledger to determine whether the second transaction satisfies the usage limitations. The operations may include receiving, in response to the request, a verification result that indicates that the second transaction satisfies the usage limitations. The operations may include transferring a digital asset to a seller account on a third distributed ledger based on the verification result.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

Further embodiments are as follows:
1. A method, executed by at least one processor, comprising:
   issuing, via a first issuer contract on a first distributed ledger, a cryptographic token with usage limitations to a user account on the first distributed ledger;
   transferring the cryptographic token from the user account on the first distributed ledger to a first mediation contract on the first distributed ledger;
   detecting a first transaction that is associated with a transfer of the cryptographic token from the first mediation contract to a second mediation contract on a second distributed ledger;
   detecting, after the transfer, a second transaction that is associated with a use of the cryptographic token on the second distributed ledger;
   issuing a request to the first issuer contract on the first distributed ledger to determine whether the second transaction satisfies the usage limitations;
   receiving, in response to the request, a verification result that indicates that the second transaction satisfies the usage limitations; and
   transferring a digital asset to a seller account on a third distributed ledger based on the verification result.
2. The method according to embodiment 1, further comprising transferring the digital asset from a user account on the third distributed ledger to a second issuer contract on the third distributed ledger,
   wherein the transfer of the digital asset to the second issuer contract is performed in response to the issuance of the cryptographic token.
3. The method according to embodiment 1, wherein the third distributed ledger is different from the first distributed ledger and the second distributed ledger, and the second distributed ledger is different from the first distributed ledger.
4. The method according to embodiment 1, wherein the second distributed ledger is same as the third distributed ledger.
5. The method according to embodiment 1, wherein the first mediation contract, the second mediation contract, and the first issuer contract are computer-executable programs.
6. The method according to embodiment 1, wherein the first transaction includes a first token identifier associated with the cryptographic token.
7. The method according to embodiment 6, further comprising:
   extracting the first token identifier from the first transaction; and
   storing the first token identifier in a database.
8. The method according to embodiment 7, wherein the request to the first issuer contract on the first distributed ledger is issued based on a determination that a second token identifier in the second transaction is same as the first token identifier stored in the database.
9. The method according to embodiment 1, wherein the use of the cryptographic token on the second distributed ledger includes:
   a first transfer of the cryptographic token from the second mediation contract to a user account on the second distributed ledger, and
   a second transfer of the cryptographic token from the user account on the second distributed ledger to a seller account on the second distributed ledger.
10. The method according to embodiment 1, wherein the transfer of the digital asset is performed via an escrow transaction.
11. The method according to embodiment 1, wherein the verification result that indicates that the second transaction satisfies the usage limitations is received from the first distributed ledger.
12. The method according to embodiment 1, wherein the transfer of the digital asset to the seller account on a third distributed ledger is performed via a third mediation contract on the third distributed ledger.
13. One or more non-transitory computer-readable storage media configured to store instructions that, in response to being executed, cause a system to perform operations, the operations comprising:
   issuing, via a first issuer contract on a first distributed ledger, a cryptographic token with usage limitations to a user account on the first distributed ledger;
   transferring the cryptographic token from the user account on the first distributed ledger to a first mediation contract on the first distributed ledger;
   detecting a first transaction that is associated with a transfer of the cryptographic token from the first mediation contract to a second mediation contract on a second distributed ledger;
   detecting, after the transfer, a second transaction that is associated with a use of the cryptographic token on the second distributed ledger;
   issuing a request to the first issuer contract on the first distributed ledger to determine whether the second transaction satisfies the usage limitations;
   receiving, in response to the request, a verification result that indicates that the second transaction satisfies the usage limitations; and
   transferring a digital asset to a seller account on a third distributed ledger based on the verification result.
14. The one or more non-transitory computer-readable storage media according to embodiment 13, wherein the operations further comprising transferring the digital asset from a user account on the third distributed ledger to a second issuer contract on the third distributed ledger,
   wherein the transfer of the digital asset to the second issuer contract is performed in response to the issuance of the cryptographic token.
15. The one or more non-transitory computer-readable storage media according to embodiment 13, wherein the third distributed ledger is different from the first distributed ledger and the second distributed ledger, and the second distributed ledger is different from the first distributed ledger.
16. The one or more non-transitory computer-readable storage media according to embodiment 13, wherein the second distributed ledger is same as the third distributed ledger.
17. The one or more non-transitory computer-readable storage media according to embodiment 13, wherein the first mediation contract, the second mediation contract, and the first issuer contract are computer-executable programs.
18. The one or more non-transitory computer-readable storage media according to embodiment 13, wherein the first transaction includes a first token identifier associated with the cryptographic token.
19. The one or more non-transitory computer-readable storage media according to embodiment 18, wherein the operations further comprise:
   extracting the first token identifier from the first transaction; and
   storing the first token identifier in a database.
20. A system, comprising:
   a memory storing instructions; and
   a processor, coupled to the memory, that executes the instructions to perform a process comprising:
      issuing, via a first issuer contract on a first distributed ledger, a cryptographic token with usage limitations to a user account on the first distributed ledger;
      transferring the cryptographic token from the user account on the first distributed ledger to a first mediation contract on the first distributed ledger;
      detecting a first transaction that is associated with a transfer of the cryptographic token from the first mediation contract to a second mediation contract on a second distributed ledger;
      detecting, after the transfer, a second transaction that is associated with a use of the cryptographic token on the second distributed ledger;
      issuing a request to the first issuer contract on the first distributed ledger to determine whether the second transaction satisfies the usage limitations;
      receiving, in response to the request, a verification result that indicates that the second transaction satisfies the usage limitations; and
      transferring a digital asset to a seller account on a third distributed ledger based on the verification result.

## Claims

1. A method, executed by at least one processor, comprising:
issuing, via a first issuer contract on a first distributed ledger, a cryptographic token with usage limitations to a user account on the first distributed ledger;
transferring the cryptographic token from the user account on the first distributed ledger to a first mediation contract on the first distributed ledger;
detecting a first transaction that is associated with a transfer of the cryptographic token from the first mediation contract to a second mediation contract on a second distributed ledger;
detecting, after the transfer, a second transaction that is associated with a use of the cryptographic token on the second distributed ledger;
issuing a request to the first issuer contract on the first distributed ledger to determine whether the second transaction satisfies the usage limitations;
receiving, in response to the request, a verification result that indicates that the second transaction satisfies the usage limitations; and
transferring a digital asset to a seller account on a third distributed ledger based on the verification result.

2. The method according to claim 1, further comprising transferring the digital asset from a user account on the third distributed ledger to a second issuer contract on the third distributed ledger,
wherein the transfer of the digital asset to the second issuer contract is performed in response to the issuance of the cryptographic token.

3. The method according to claim 1, wherein the third distributed ledger is different from the first distributed ledger and the second distributed ledger, and the second distributed ledger is different from the first distributed ledger.

4. The method according to claim 1, wherein the second distributed ledger is same as the third distributed ledger.

5. The method according to claim 1, wherein the first mediation contract, the second mediation contract, and the first issuer contract are computer-executable programs.

6. The method according to claim 1, wherein the first transaction includes a first token identifier associated with the cryptographic token.

7. The method according to claim 6, further comprising:
extracting the first token identifier from the first transaction; and
storing the first token identifier in a database.

8. The method according to claim 7, wherein the request to the first issuer contract on the first distributed ledger is issued based on a determination that a second token identifier in the second transaction is same as the first token identifier stored in the database.

9. The method according to claim 1, wherein the use of the cryptographic token on the second distributed ledger includes:
a first transfer of the cryptographic token from the second mediation contract to a user account on the second distributed ledger, and
a second transfer of the cryptographic token from the user account on the second distributed ledger to a seller account on the second distributed ledger.

10. The method according to claim 1, wherein the transfer of the digital asset is performed via an escrow transaction.

11. The method according to claim 1, wherein the verification result that indicates that the second transaction satisfies the usage limitations is received from the first distributed ledger.

12. The method according to claim 1, wherein the transfer of the digital asset to the seller account on a third distributed ledger is performed via a third mediation contract on the third distributed ledger.

13. One or more non-transitory computer-readable storage media configured to store instructions that, in response to being executed, cause a system to perform operations, the operations comprising:
issuing, via a first issuer contract on a first distributed ledger, a cryptographic token with usage limitations to a user account on the first distributed ledger;
transferring the cryptographic token from the user account on the first distributed ledger to a first mediation contract on the first distributed ledger;
detecting a first transaction that is associated with a transfer of the cryptographic token from the first mediation contract to a second mediation contract on a second distributed ledger;
detecting, after the transfer, a second transaction that is associated with a use of the cryptographic token on the second distributed ledger;
issuing a request to the first issuer contract on the first distributed ledger to determine whether the second transaction satisfies the usage limitations;
receiving, in response to the request, a verification result that indicates that the second transaction satisfies the usage limitations; and
transferring a digital asset to a seller account on a third distributed ledger based on the verification result.

14. A system, comprising:
a memory storing instructions; and
a processor, coupled to the memory, that executes the instructions to perform a process comprising:
issuing, via a first issuer contract on a first distributed ledger, a cryptographic token with usage limitations to a user account on the first distributed ledger;
transferring the cryptographic token from the user account on the first distributed ledger to a first mediation contract on the first distributed ledger;
detecting a first transaction that is associated with a transfer of the cryptographic token from the first mediation contract to a second mediation contract on a second distributed ledger;
detecting, after the transfer, a second transaction that is associated with a use of the cryptographic token on the second distributed ledger;
issuing a request to the first issuer contract on the first distributed ledger to determine whether the second transaction satisfies the usage limitations;
receiving, in response to the request, a verification result that indicates that the second transaction satisfies the usage limitations; and
transferring a digital asset to a seller account on a third distributed ledger based on the verification result.
